# EUROPEAN PATENT SPECIFICATION

(11) **EP 4 366 050 B1**
(45) Date of publication and mention of the grant of the patent: **24.12.2025**
(21) Application number: 22864951.3
(22) Date of filing: 24.08.2022
(51) Int. Cl.: H01M 50/178, H01M 50/186, H01M 50/105

(54) **BATTERY CELL AND BATTERY MODULE INCLUDING THE SAME**
BATTERIEZELLE UND BATTERIEMODUL DAMIT
ÉLÉMENT DE BATTERIE ET MODULE DE BATTERIE LE COMPRENANT

(30) Priority: 02.09.2021 KR 20210116869
(43) Date of publication of application: 08.05.2024
(73) Proprietor: LG Energy Solution, Ltd., Seoul 07335 (KR)
(72) Inventor: YUN, Hyun Seop, Daejeon 34122 (KR); LEE, Bumhyun, Daejeon 34122 (KR); SEONG, Junyeob, Daejeon 34122 (KR)
(74) Representative: Plasseraud IP
(86) International application number: PCT/KR2022/012663
(87) International publication number: WO 2023/033448

(56) References cited:
- KR-A- 20130 065 286
- KR-A- 20140 061 153
- KR-A- 20140 130 032
- KR-A- 20160 106 932
- KR-A- 20210 088 172
- KR-B1- 100 890 160
- KR-B1- 101 831 252
- US-A1- 2018 241 023

## Description

### [Technical Field]

This application claims priority to Korean Patent Application No. 10-2021-0116869 filed in the Korean Intellectual Property Office on September 02, 2021.

The present disclosure relates to a battery cell and a battery module including the same, and particularly relates to a battery cell for increasing a sealing level, and a battery module including the same.

### [Background Art]

As technical developments and demands on mobile devices are increasing, demands on secondary batteries as energy sources are abruptly increasing. Hence, research on the rechargeable batteries for satisfying various kinds of demands are in progress.

The currently commercially available rechargeable batteries include a nickel cadmium battery, a nickel metal hydride battery, a nickel zinc alloy battery, and a lithium secondary battery. The lithium secondary battery has merits of free charging and discharging, low self-discharging rates, and high energy density and is being paid high attention to.

The rechargeable battery is classified into a cylindrical battery and a square-type battery of which the electrode assembly is installed in a cylindrical or square-type metal can, and a pouch-type battery of which the electrode assembly is installed in a pouch-type case of an aluminum laminate sheet, depending on a shape of the battery case.

Such rechargeable batteries are classified depending on a structure of an electrode assembly in which a positive electrode, a negative electrode, and a separating membrane interposed between the positive electrode and the negative electrode are stacked. Representative examples thereof may include a jelly-roll type (wound type) of electrode assembly in which a positive electrode and a negative electrode having a long sheet-like shape are wound with a separating membrane interposed therebetween, a stacked type of electrode assembly in which a plurality of positive electrodes and negative electrodes that are cut in a predetermined size unit are sequentially stacked with separating membranes interposed therebetween, and the like. Recently, a stack/folding type of electrode assembly, a combined form of the jelly-roll type and the stack type, has been developed in order to solve problems of the jelly-roll type of electrode assemblies and the stack-type electrode assemblies. From among them, particularly uses of the pouch-type battery with a structure in which the stack-type or stack/folding-type electrode assembly is installed in the pouch-type battery case of a laminate sheet is gradually increasing because of low manufacturing costs, light weight, and easy transformation.

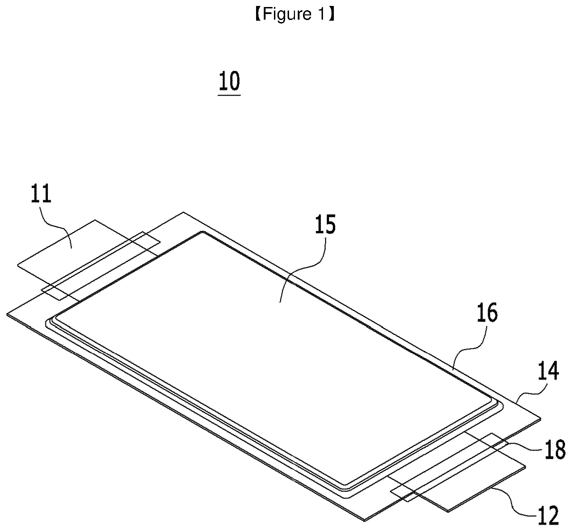

FIG. 1 shows a perspective view of a conventional pouch-type battery cell.

Referring to FIG. 1, the conventional pouch-type battery cell may include a cell case 14 of a laminate sheet for receiving an electrode assembly including a positive electrode, a negative electrode, and a separating membrane. **In** detail, the electrode assembly mounted on the receiving portion 15 that is a center area of the cell case 14 thermally fuses a sealing portion 16 that is an edge area of the cell case 14, thereby being protected from the outside. Electrode leads 11 and 12 connected to an electrode tab of the electrode assembly in the cell case 14 passes through the sealing portion 16 and is drawn out to the outside of the cell case 14, and a lead film 18 is positioned between top/bottom surfaces of the electrode leads 11 and 12 and the sealing portion 16.

As the sealing portion 16 of the battery cell 10 is generally bonded by thermal fusion, deviation of rigidity per position may be great, and the sealing portion 16 may be easily ruptured when an internal pressure of the battery cell 10 increases. When the sealing portion 16 of the battery cell 10 or a peripheral area thereof is opened and gas in the battery cell 10 is discharged, a fire may be generated to the battery cell 10, and the fire may be spread to an adjacent battery cell 10.

As energy density of the battery cell recently increases, the amount of gas generated in the battery cell also increases, and this problem is further worsened.

The above information disclosed in this Background section is only for enhancement of understanding of the background of the invention, and therefore it may contain information that does not form the prior art that is already known in this country to a person of ordinary skill in the art.

Further prior art is described in KR 2016 0106932 A, US 2018/241023 A1, and KR 101 831 252 B1, which discloses the features of the preamble of claim 1.

### [Disclosure]

The present invention has been made in an effort to provide a battery cell for removing deviation of rigidity of a sealing portion, and a battery module including the same.

However, tasks to be solved by embodiments of the present invention may not be limited to the above-described task and may be extended in various ways within a range of technical scopes included in the present invention.

An embodiment of the present invention provides a battery cell including: an electrode assembly including a positive electrode, a negative electrode, and a separating membrane disposed between the positive electrode and the negative electrode; a cell case for receiving the electrode assembly; and an electrode lead connected to the electrode assembly and protruding from one end of the cell case, wherein the cell case includes a receiving portion for receiving the electrode assembly and a sealing portion formed on an edge of the cell case and sealing the electrode assembly, and a reinforcing member is positioned on an external side of the cell case combined by the sealing portion, wherein the reinforcing member includes a bending portion that is bent to have a curvature, an extension extending from the bending portion, and a connector connected to respective ends of the extension, wherein the extension includes a first extension and a second extension extending from respective ends of the bending portion, and a gap between the first extension and second extension has a value that is less than a maximum diameter of the bending portion, and wherein the connector extends to the second extension from the first extension, and a hook is formed on a portion contacting the second extension on the connector.

The reinforcing member may be disposed at a position that corresponds to the sealing portion.

The reinforcing member may be disposed at a position that corresponds to the electrode lead in the cell case.

The reinforcing member may have a length and a width.

A bent unit may be formed between the bending portion and the extension.

The connector may be formed by entangling portions extending from first extension and the second extension with each other.

A reinforcing tape may be provided to an external side of the cell case combined by the sealing portion.

Another embodiment of the present invention provides a battery module including at least the one battery cell.

According to the embodiments, the present disclosure provides an additional member around the sealing portion of the battery cell, thereby removing the deviation of rigidity of the sealing portion, and minimizing gas discharge of the battery cell.

The effects of the present invention are not limited to the effects mentioned above, and other effects not mentioned can be clearly understood by those skilled in the art from the description of the claims.

### [Description of the Drawings]

FIG. 1 shows a perspective view of a conventional pouch-type battery cell.
FIG. 2 shows a perspective view of a battery cell according to an embodiment of the present disclosure.
FIG. 3 shows a vulnerable region of the battery cell of FIG. 2.
FIG. 4 shows a cross-section taken along a line A-A of FIG. 3 when a gas pocket is generated.
FIG. 5 shows a partial top view of a battery cell with a reinforcing tape according to an embodiment of the present disclosure.
FIG. 6 shows a partial top view of a battery cell with a reinforcing tape according to another embodiment of the present disclosure.
FIG. 7 shows a cross-section taken along a line B-B of FIG. 6 when a gas pocket is generated.
FIG. 8 shows a partial top view of a battery cell with a reinforcing member according to another embodiment of the present disclosure.
FIG. 9 shows a partial top view of a battery cell with a reinforcing member according to another embodiment of the present disclosure.
FIG. 10 shows a partial top view of a battery cell according to another embodiment of the present disclosure.
FIG. 11 shows a partial top view of a battery cell according to another embodiment of the present disclosure.

### [Mode for Invention]

The present invention will be described more fully hereinafter with reference to the accompanying drawings, in which exemplary embodiments of the invention are shown.

The drawings and description are to be regarded as illustrative in nature and not restrictive, and like reference numerals designate like elements throughout the specification

The size and thickness of each configuration shown in the drawings are arbitrarily shown for better understanding and ease of description, but the present invention is not limited thereto. The thicknesses of layers, films, panels, regions, etc., are enlarged for clarity. For better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. The word "on" or "above" means positioned on or below the object portion, and does not necessarily mean positioned on the upper side of the object portion based on a gravitational direction On the other hand, as in explaining that it is "on" or "above" another part, explaining being "below" or "under" another part may also be understood with reference to the above description.

Unless explicitly described to the contrary, the word "comprise", and variations such as "comprises" or "comprising", will be understood to imply the inclusion of stated elements but not the exclusion of any other elements.

Further, in the specification, the phrase "on a plane" means when an object portion is viewed from above, and the phrase "on a cross-section" means when a cross-section taken by vertically cutting an object portion is viewed from the side.

A battery cell according to an embodiment will now be described.

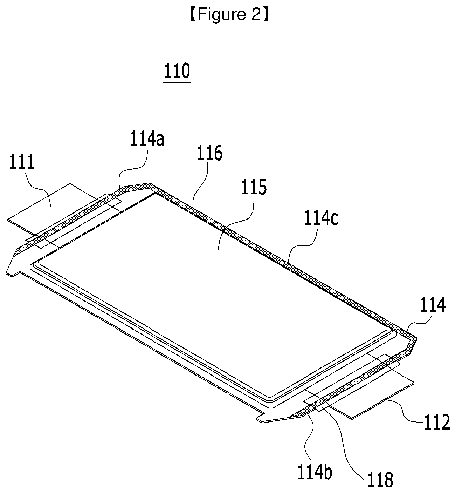

FIG. 2 shows a perspective view of a battery cell according to an embodiment.

Referring to FIG. 2, the battery cell 110 may be provided as a pouch type for maximizing the number of stacks per area. The battery cell 110 provided in a pouch type is manufactured by receiving the electrode assembly into the cell case 114, and thermally fusing an edge of the cell case 114. Here, the electrode assembly includes a positive electrode, a negative electrode, and a separating membrane disposed between the positive electrode and the negative electrode, and is provided as a jelly-roll type (or a wound type), a stack type, or a complex type (or a stack/folding type).

The cell case 114 includes a receiving portion 115 for receiving the electrode assembly and a sealing portion 116 formed on the edge of the cell case 114 and sealing the electrode assembly. The cell case 114 has a laminate structure of a resin layer/a metal thin-film layer/a resin layer.

The cell case 114 is provided in a form in which the laminate sheet is folded and corners thereof contacting each other are sealed. In this instance, an internal space formed by folding the sheet may be the receiving portion 115 for receiving the electrode assembly, and the three opened corners of the folded sheet are sealed to form the sealing portion 116.

Here, the sealing portion 116 is illustrated to be formed on respective ends 114a and 114b of the cell case 114 and the one side 114c for connecting them, and without being limited thereto, the sealing portion 116 may be formed on the entire corners of the cell case 114.

The electrode leads 111 and 112 pass through the sealing portion 116 and protrude in an outward direction of the cell case 114. In detail, first ends of the respective electrode leads 111 and 112 are positioned inside the battery cell 110 and are electrically connected to a positive electrode tab or a negative electrode tab of the electrode assembly, and second ends of the electrode leads 111 and 112 are provided outside the battery cell 110 so they may be electrically connected to an additional member, for example, a bus bar.

The lead film 118 may be positioned on top surfaces or bottom surfaces of the electrode leads 111 and 112 corresponding to the sealing portion 116. The lead film 118 may prevent the electrode leads 111 and 112 from being shortcircuited when the sealing portion 116 undergoes thermal fusion or press fusion. The lead film 118 is positioned between the sealing portion 116 and the electrode leads 111 and 112 and increases the sealing property between the sealing portion 116 and the electrode leads 111 and 112.

The lead film 118 may have a greater width than the electrode leads 111 and 112. The lead film 118 may be longer than the sealing portion 116 in the direction in which the electrode leads 111 and 112 protrude, and it may be shorter than the electrode leads 111 and 112. Accordingly, the lead film 118 may not hinder the electrical connection of the electrode leads 111 and 112 and may prevent lateral sides of the electrode leads 111 and 112 from being exposed to the outside.

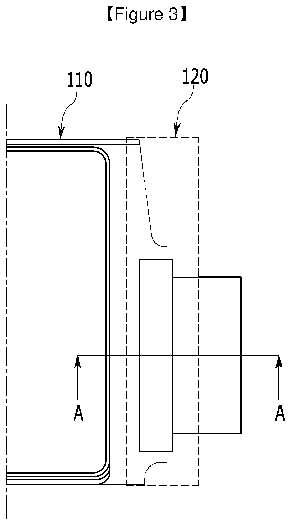

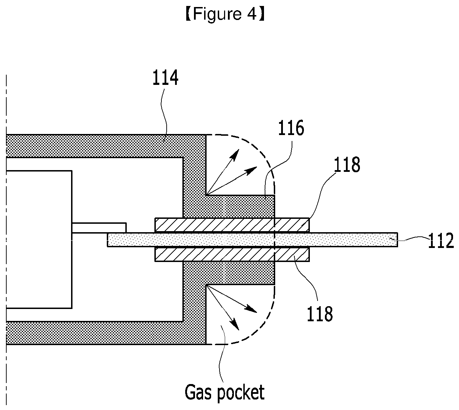

FIG. 3 shows a vulnerable region in a battery cell of FIG. 2. FIG. 4 shows an incision surface of a line A-A of FIG. 3 when a gas pocket is generated.

Referring to FIG. 3 and FIG. 4, the battery cell 110 includes electrode leads 111 and 112 passing through the sealing portion 116 and protruding from one end of the cell case 114. As the electrode leads 111 and 112 pass through the sealing portion 116, the sealing portion 116 formed on the respective ends 114a and 114b at which the electrode leads 111 and 112 are positioned may have a greater rigidity deviation than the sealing portion 116 formed on one side 114c. As described above, the region disposed around the sealing portion 116 formed on the respective ends 114a and 114b is referred to as a vulnerable region 120 that may be easily opened according to an internal pressure.

Here, the vulnerable region 120 according to the present disclosure given with the drawings and descriptions is described with reference to one end of the battery cell, but it is not limited thereto, and other ends of the battery cell may also be described in an identical or similar way.

As shown in FIG. 4, a gas pocket is formed inside the battery cell 110 according to generation of heat of the battery cell 110, and hence, when the internal pressure of the battery cell 110 increases, the above-described vulnerable region 120 may be easily opened when compared to other regions of the battery cell 110. Therefore, it is desirable to provide a member for reinforcing rigidity of the vulnerable region 120 to the battery cell 110.

A reinforcing tape 210 and a reinforcing member 220 according to the present disclosure for reinforcing rigidity of the vulnerable region 120 will now be described.

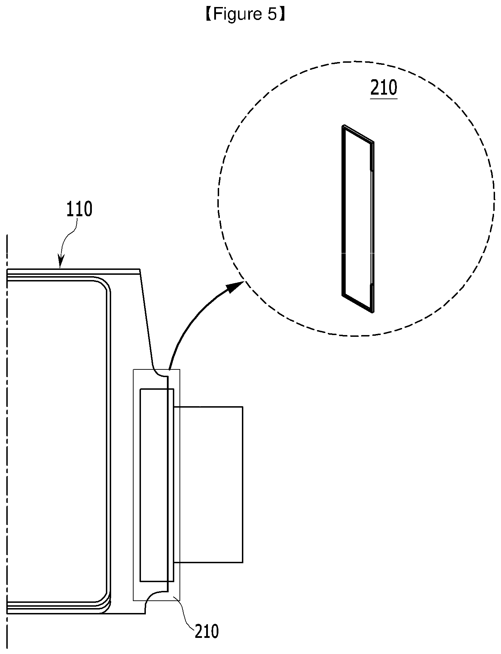

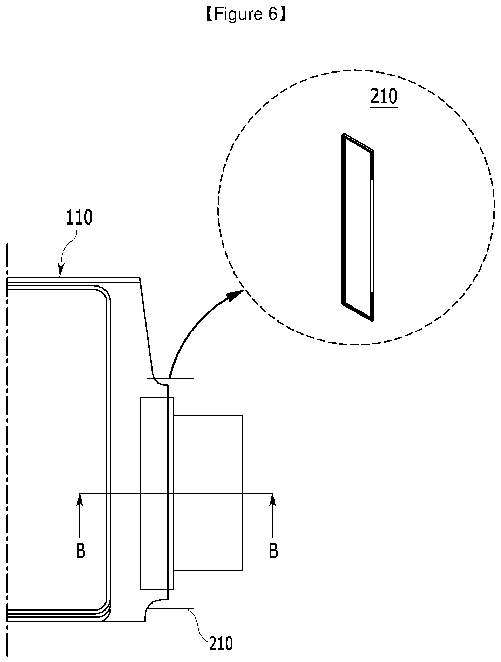

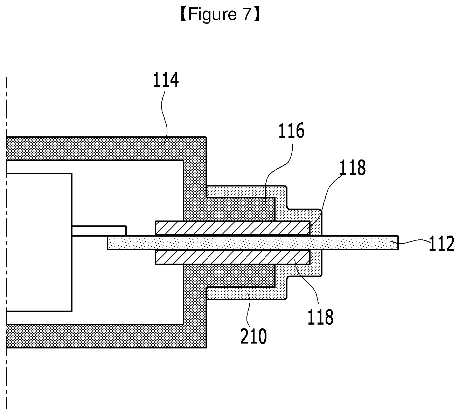

FIG. 5 and FIG. 6 show that a reinforcing tape is provided to a battery cell according to an embodiment. FIG. 7 shows an incision surface of a line B-B of FIG. 6 when a gas pocket is generated.

Referring to FIG. 5 and FIG. 6, the reinforcing tape 210 is provided to the vulnerable region 120 of the battery cell 110. In detail, the reinforcing tape 210 is provided to an external side of the cell case 114 to fix two sides of the cell case 114 combined by the sealing portion 116. The reinforcing tape 210 is provided to correspond to the sealing portion 116 formed on the respective ends 114a and 114b of the cell case 114. The reinforcing tape 210 is provided to correspond to the portion where the electrode leads 111 and 112 are positioned or the portion where the lead film 118 is positioned in the cell case 114. The reinforcing tape 210 is shown to be provided to one side of the battery cell 110 in the drawing, and the reinforcing tape 210 is also provided to another side of the battery cell 110. For example, the reinforcing tape 210 surrounds one side and another side of the vulnerable region.

The reinforcing tape 210 shown in FIG. 5 is shown to entirely cover the region that corresponds to the lead film 118 as an example, and the reinforcing tape 210 shown in FIG. 6 is shown to partly cover the region that corresponds to the lead film 118 as an example. FIG. 5 and FIG. 6 show that the reinforcing tape 210 is provided to part of the vulnerable region 120, and without being limited thereto, the reinforcing tape 210 may be entirely provided to the vulnerable region 120 or may be provided to cover regions that are different from what is shown in the drawing.

An adhesive may be applied to one side of the reinforcing tape 210. By including the adhesive, the reinforcing tape 210 may be easily attached to the cell case 114. The reinforcing tape 210 may be easily crafted. A size of the reinforcing tape 210 may be easily adjusted by cutting so a designer may easily adjust the size according to intention when it is applied to the cell case 114. The reinforcing tape 210 is a material with more than a predetermined level of toughness. For example, the reinforcing tape 210 may be a PET tape, a silicon tape, or an aluminum (AL) tape.

Referring to FIG. 7, the reinforcing tape 210 supplements rigidity of the sealing portion 116. When a gas pocket is generated in the battery cell 110 by an overheating of the battery cell 110, the reinforcing tape 210 minimizes shearing force applied to the sealing portion 116. The reinforcing tape 210 prevents the sealing portion 116 from being opened, thereby preventing the gas in the battery cell 110 from being discharged to the outside. Therefore, the reinforcing tape 210 is preferably provided to an outermost end of the sealing portion 116, an external side of the sealing portion 116, or an outermost end of the cell case 114, and in detail, a position disposed near the protruding electrode leads 111 and 112.

When a substantial pressure works in the battery cell 110 as the gas pocket is formed to be somewhat large, rigidity of the reinforcing tape 210 may be insufficient to minimize the shearing force applied to the sealing portion 116. Therefore, hereinafter, the reinforcing member 220 having greater rigidity than the reinforcing tape 210 will be described.

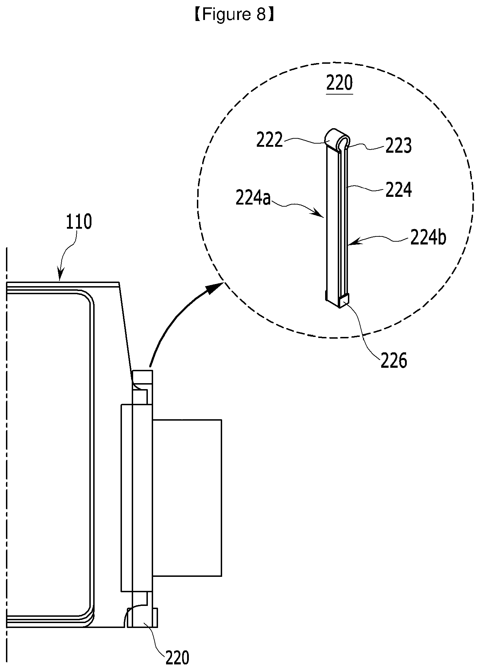

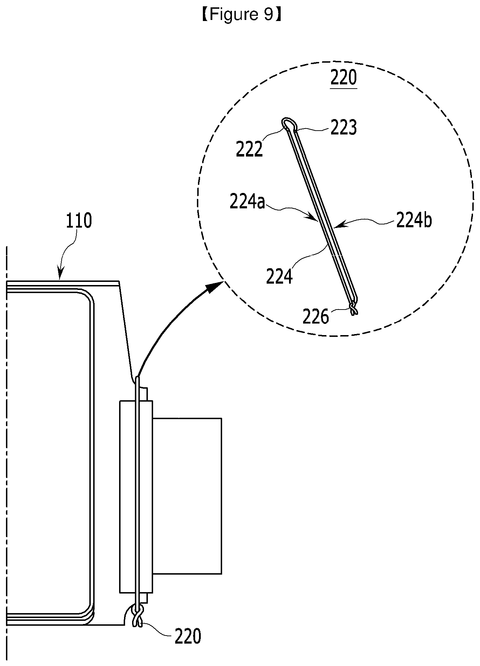

FIG. 8 shows an example in which a reinforcing member is provided to a battery cell according to another embodiment. FIG. 9 shows another example in which a reinforcing member is provided to a battery cell according to another embodiment.

Referring to FIG. 8 and FIG. 9, the reinforcing member 220 is provided to the vulnerable region 120 of the battery cell 110. The reinforcing member 220 is provided to the external side of the cell case 114 so that the reinforcing member 220 supports the external side of the cell case 114 and minimizes the shearing force applied to the sealing portion 116.

The reinforcing member 220 is generated by forming a long member so that its respective ends in a length direction contact each other and by connecting the respective ends. The reinforcing member 220 has a folded shape. The reinforcing member 220 may have a width as shown in FIG. 8. In addition, as shown in FIG. 9, the reinforcing member 220 may be provided as a line of which width is narrow or which that has a length.

The reinforcing member 220 is a material that is very rigid and is also ductile. For example, the reinforcing member 220 may be manufactured of a metal, plastic, or other substances.

The reinforcing member 220 includes a bending portion 222, an extension 224, and a connector 226. Here, the bending portion 222 represents a portion that is bent so that the reinforcing member 220 is formed thereon, the connector 226 indicates a portion where respective ends of the member are connected to each other, and the extension 224 indicates a portion covering from the bending portion 222 to the connector 226. For ease of description, two portions of the reinforcing member 220 that are bent by the bending portion 222 and face each other, that is, two portions of the extension 224 extending from respective ends of the bending portion 222, are referred to as a first extension 224a and a second extension 224b.

Two sides of the cell case 114 are inserted between the bending portion 222 and the connector 226 so that the reinforcing member 220 fixes a gap between the two sides. The reinforcing member 220 is provided to correspond to the sealing portion 116 formed on the respective ends 114a and 114b of the cell case 114. The reinforcing member 220 is provided to correspond to a portion where the electrode leads 111 and 112 are positioned or a portion where the lead film 118 is positioned in the cell case 114.

The reinforcing member 220 has a gap for inserting the two sides of the cell case 114 that is the end of the battery cell 110 between the first extension 224a and the second extension 224b. In this instance, the gap is wide enough so that the end of the battery cell 110 is inserted into it, and the gap is narrow enough so that the inserted end of the battery cell 110 does not leave it. The gap between the first extension 224a and the second extension 224b is preferably constant according to its position. This is for the reinforcing member 220 to evenly support the two sides of the cell case 114.

A bent unit 223 is formed between the bending portion 222 and the extension 224. The bent unit 223 is bent toward the inside of the reinforcing member 220 between the bending portion 222 and the extension 224. The bending portion 222 has a round shape with curvature so when the extension 224 is connected from the bending portion 222 without the bent unit 223, a maximum diameter of the bending portion 222 becomes a gap size between the first extension 224a and the second extension 224b. However, when the bent unit 223 is formed between the bending portion 222 and the extension 224, the maximum diameter of the bending portion 222 may be different from the gap size between the first extension 224a and the second extension 224b, thereby allowing freer design. Here, the maximum diameter represents an interior diameter of the bending portion 222. When the bending portion 222 does not completely form a circle or a semicircle, the maximum distance spaced toward the second extension 224b from the first extension 224a is considered to be the above-described maximum diameter on the bending portion 222.

When the above-described gap is slightly less than the thickness of the battery cell 110, the space between the first extension 224a and the second extension 224b is increased, and in this instance, the bending portion 222 receives a tension and its curvature is reduced, and hence, the space between the first extension 224a and the second extension 224b is increased and the connector 226 positioned at the end of the extension 224 receives an excessive amount of pressure. However, when the bent unit 223 is formed on the reinforcing member 220 and when a curvature value of the bending portion 222 is reduced, the bent unit 223 is deformed, and the gap between the first extension 224a and the second extension 224b is increased, thereby minimizing the above-noted problem.

The connector 226 connects ends of the first extension 224a and the second extension 224b. The reinforcing member 220 maintains the shape and stably supports the end of the battery cell 110 through the connector 226.

The connector 226 may have various shapes.

For example, as shown in FIG. 8, the connector 226 has a shape in which one of the first extension 224a and the second extension 224b extends to the other thereof. For example, the connector 226 is fixed to the first extension 224a and extends toward the second extension 224b. In this instance, a hook is formed on a portion that contacts the second extension 224b on the connector 226, and as the hook is hooked at the second extension 224b, the first extension 224a is stably combined to the second extension 224b.

For another example, as shown in FIG. 9, the connector 226 respectively extends from the first extension 224a and the second extension 224b, and their ends may be entangled with each other. This is referred to as an entangled shape. The connector 226 provided in the entangled shape is formed by entangling the ends of the first extension 224a and the second extension 224b so the connector 226 may be formed at any position. In detail, when the first extension 224a and the second extension 224b are formed to be slightly long, the reinforcing member 220 may be correctly combined to the battery cell 110 by adjusting the position of the connector 226.

The shape of the connector 226 is not to be limited to the above-described examples and the drawings, and the connector 226 may have various shapes.

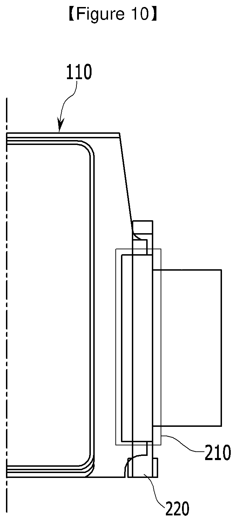

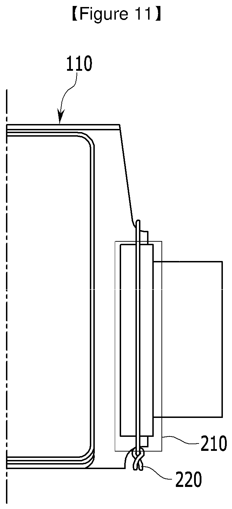

FIG. 10 shows an example of a battery cell according to the other embodiment. FIG. 11 shows another example of a battery cell according to the other embodiment.

Referring to FIG. 10 and FIG. 11, a reinforcing tape 210 and a reinforcing member 220 are provided to the vulnerable region 120 of the battery cell 110 according to the present embodiment. When the reinforcing tape 210 and the reinforcing member 220 are provided to the battery cell 110, and a gas pocket is formed in the battery cell 110, the reinforcing member 220 minimizes the shearing force applied to the sealing portion 116, and the reinforcing tape 210 prevents the sealing portion 116 from being opened. Here, the reinforcing tape 210 is provided to the outermost end of the sealing portion 116, the external side of the sealing portion 116, or the outermost end of the cell case 114, in detail, the position disposed near the protruding electrode leads 111 and 112. The reinforcing tape 210 and the reinforcing member 220 have been described in detail through the above-described embodiments so no detailed description thereof will be provided in the present embodiment.

The above-described battery cell 110 may be included in the battery module or the battery pack. The battery pack may be formed by packaging at least one battery module in the pack case. The battery module may be made by forming at least one battery cell 110 into a module. However, the battery cells 110 included in the battery pack may not be packaged into an additional frame that is like the battery module but may be mounted in the pack case of the battery pack. The battery pack may additionally include a battery management system (BMS) and a cooling device for managing temperatures or voltages of the battery.

The battery module including the above-described battery cell 110 and the battery pack including the same are applicable to various types of devices. The devices include transport means such as electric bicycles, electric vehicles, and hybrid vehicles, but the present invention is not limited thereto, and it may be applied to various devices that use the battery module and the battery pack including the same, which also belongs to the scope of the present invention.

While this invention has been described in connection with what is presently considered to be practical embodiments, it is to be understood that the invention is not limited to the disclosed embodiments, but to the scope of the appended claims.

### <Description of symbols>

110: battery cell
111,112: electrode lead
114: cell case
115: receiving portion
116: sealing portion
118: lead film
120: vulnerable region
210: reinforcing tape
220: reinforcing member

## Claims

1. A battery cell (110) comprising:
an electrode assembly including a positive electrode, a negative electrode, and a separating membrane disposed therebetween;
a cell case (114) for receiving the electrode assembly; and
electrode leads (111, 112) connected to the electrode assembly and protruding from one end of the cell case (114),
wherein the cell case (114) includes a receiving portion (115) to receive the electrode assembly and a sealing portion (116) formed on an edge of the cell case (114) to seal the electrode assembly, and
a reinforcing member (220) positioned on an external side of the cell case (114) to at least partially overlap the sealing portion (116),
**characterized in that** the reinforcing member (220) includes a bending portion (222) that is bent to have a curvature, an extension (224) extending from the bending portion (222), and a connector (226) connected to respective ends of the extension (224),
wherein the extension (224) includes a first extension (224a) and a second extension (224b) extending from respective ends of the bending portion (222), and a gap between the first extension (224a) and the second extension (224b) defined by a distance that is less than a maximum diameter of the bending portion (222), and
wherein the connector (226) extends to the second extension (224b) from the first extension (224a), and a hook is formed on a portion contacting the second extension (224b) on the connector (226).

2. The battery cell (110) of claim 1, wherein the reinforcing member (220) is disposed to surround at least a portion of the sealing portion (116).

3. The battery cell (110) of claim 1, wherein the reinforcing member (220) is disposed adjacent the electrode lead (111, 112) in the cell case (114).

4. The battery cell (110) of claim 1, wherein the reinforcing member (220) has a length and a width.

5. The battery cell (110) of claim 1, wherein a bent unit (223) is formed between the bending portion (222) and the extension (224).

6. The battery cell (110) of claim 1, wherein the connector (226) is formed by entangling portions extending from the first extension (224a) and the second extension (224b) with each other.

7. The battery cell (110) of claim 1, wherein a reinforcing tape (210) is provided to an external side of the cell case (114) to at least partially overlap the sealing portion (116).

8. A battery module including at least one battery cell (110) of claim 1.

## Patentansprüche

1. Batteriezelle (110), umfassend:
eine Elektrodenanordnung, welche eine positive Elektrode, eine negative Elektrode und eine Trennmembran umfasst, welche dazwischen angeordnet ist;
ein Zellengehäuse (114) zum Aufnehmen der Elektrodenanordnung;
und
Elektrodenleitungen (111, 112), welche mit der Elektrodenanordnung verbunden sind und von einem Ende des Zellengehäuses (114) hervorstehen,
wobei das Zellengehäuse (114) einen Aufnahmeabschnitt (115), um die Elektrodenanordnung aufzunehmen, und einen Dichtungsabschnitt (116) umfasst, welcher an einem Rand des Zellengehäuses (114) gebildet ist, um die Elektrodenanordnung abzudichten, und
ein Verstärkungselement (220), welches an einer äußeren Seite des Zellengehäuses (114) positioniert ist, um wenigstens teilweise den Dichtungsabschnitt (116) zu überlappen,
**dadurch gekennzeichnet, dass** das Verstärkungselement (220) einen Biegeabschnitt (222), welcher gebogen ist, um eine Krümmung aufzuweisen, eine Erweiterung (224), welche sich von dem Biegeabschnitt (222) erstreckt, und eine Verbindungseinheit (226) umfasst, welche mit jeweiligen Enden der Erweiterung (224) verbunden ist,
wobei die Erweiterung (224) eine erste Erweiterung (224a) und eine zweite Erweiterung (224b), welche sich von jeweiligen Enden des Biegeabschnitts (222) erstrecken, sowie einen Spalt zwischen der ersten Erweiterung (224a) und der zweiten Erweiterung (224b) umfasst, welcher durch einen Abstand definiert ist, welcher geringer als ein maximaler Durchmesser des Biegeabschnitts (222) ist, und
wobei sich die Verbindungseinheit (226) von der ersten Erweiterung (224a) zu der zweiten Erweiterung (224b) erstreckt, und wobei ein Haken an einem Abschnitt gebildet ist, welcher die zweite Erweiterung (224b) an der Verbindungseinheit (226) kontaktiert.

2. Batteriezelle (110) nach Anspruch 1, wobei das Verstärkungselement (220) angeordnet ist, um wenigstens einen Abschnitt des Dichtungsabschnitts (116) zu umgeben.

3. Batteriezelle (110) nach Anspruch 1, wobei das Verstärkungselement (220) in dem Zellengehäuse (114) benachbart zu der Elektrodenleitung (111, 112) angeordnet ist.

4. Batteriezelle (110) nach Anspruch 1, wobei das Verstärkungselement (220) eine Länge und eine Breite aufweist.

5. Batteriezelle (110) nach Anspruch 1, wobei eine gebogene Einheit (223) zwischen dem Biegeabschnitt (222) und der Erweiterung (224) gebildet ist.

6. Batteriezelle (110) nach Anspruch 1, wobei die Verbindungseinheit (226) durch sich umschlingende Abschnitte gebildet ist, welche sich miteinander von der ersten Erstreckung (224a) und der zweiten Erweiterung (224b) erstrecken.

7. Batteriezelle (110) nach Anspruch 1, wobei ein Verstärkungsband (210) an einer äußeren Seite des Zellengehäuses (114) bereitgestellt ist, um den Dichtungsabschnitt (116) wenigstens teilweise zu überlappen.

8. Batteriemodul, umfassend wenigstens eine Batteriezelle (110) nach Anspruch 1.

## Revendications

1. Élément de batterie (110) comprenant :
un ensemble d'électrodes comportant une électrode positive, une électrode négative et une membrane de séparation disposée entre celles-ci ;
un boîtier d'élément (114) pour recevoir l'ensemble d'électrodes ; et
des fils d'électrode (111, 112) connectés à l'ensemble d'électrodes et faisant saillie à partir d'une extrémité du boîtier d'élément (114),
dans lequel le boîtier d'élément (114) comporte une partie de réception (115) destinée à recevoir l'ensemble d'électrodes et une partie d'étanchéité (116) formée sur un bord du boîtier d'élément (114) pour assurer l'étanchéité de l'ensemble d'électrodes, et
un organe de renfort (220) positionné sur un côté externe du boîtier d'élément (114) pour chevaucher au moins partiellement la partie d'étanchéité (116),
**caractérisé en ce que**
l'organe de renfort (220) comporte une partie de pliage (222) qui est pliée de façon à présenter une courbure, une extension (224) s'étendant à partir de la partie de pliage (222), et un connecteur (226) connecté aux extrémités respectives de l'extension (224), dans lequel l'extension (224) comporte une première extension (224a) et une deuxième extension (224b) s'étendant à partir des extrémités respectives de la partie de pliage (222), et un espace entre la première extension (224a) et la deuxième extension (224b) défini par une distance qui est inférieure à un diamètre maximal de la partie de pliage (222), et
dans lequel le connecteur (226) s'étend jusqu'à la deuxième extension (224b) depuis la première extension (224a), et un crochet est formé sur une partie en contact avec la deuxième extension (224b) du connecteur (226).

2. Élément de batterie (110) selon la revendication 1, dans lequel l'organe de renfort (220) est disposé pour entourer au moins une partie de la partie d'étanchéité (116).

3. Élément de batterie (110) selon la revendication 1, dans lequel l'organe de renfort (220) est disposé adjacent au fil d'électrode (111, 112) dans le boîtier d'élément (114).

4. Élément de batterie (110) selon la revendication 1, dans lequel l'organe de renfort (220) a une longueur et une largeur.

5. Élément de batterie (110) selon la revendication 1, dans lequel une unité pliée (223) est formée entre la partie de pliage (222) et l'extension (224).

6. Élément de batterie (110) selon la revendication 1, dans lequel le connecteur (226) est formé par enchevêtrement de parties s'étendant à partir de la première extension (224a) et de la deuxième extension (224b) l'une avec l'autre.

7. Élément de batterie (110) selon la revendication 1, dans lequel une bande de renfort (210) est prévue sur un côté externe du boîtier d'élément (114) pour chevaucher au moins partiellement la partie d'étanchéité (116).

8. Module de batterie comportant au moins un élément de batterie (110) selon la revendication 1.
